Europäisches Patentamt

European Patent Office

Office européen des brevets

(19)

(11) EP 0 575 639 B1

(12) **EUROPÄISCHE PATENTSCHRIFT**

(45) Veröffentlichungstag und Bekanntmachung des Hinweises auf die Patenterteilung:
**04.09.1996  Patentblatt 1996/36**

(51) Int Cl.$^6$: **H02H 3/33**

(21) Anmeldenummer: **92110168.9**

(22) Anmeldetag: **16.06.1992**

(54) **Fehlerstromschutzschalter**

Ground fault circuit interrupter

Disjoncteur de défaut à la terre

(84) Benannte Vertragsstaaten:
**AT BE CH DE ES FR GB GR IT LI NL PT**

(43) Veröffentlichungstag der Anmeldung:
**29.12.1993  Patentblatt 1993/52**

(73) Patentinhaber: **SIEMENS AKTIENGESELLSCHAFT 80333 München (DE)**

(72) Erfinder:
• **Bauer, Bernhard, Dipl.-Ing. (FH) W-8401 Grossberg (DE)**
• **Stich, Karl-Heinz W-8400 Regensburg (DE)**

(56) Entgegenhaltungen:
**EP-A- 0 084 814**          **EP-A- 0 106 045**
**EP-A- 0 392 204**          **DE-A- 3 409 603**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung bezieht sich auf einen Fehlerstromschutzschalter, bei dem Vorkehrungen getroffen sind für frequenzunabhängige Auslösung, für kurzeitverzögerte Auslösung und der durch netzspannungsunabhängigen Aufbau oder andere bekannte Maßnahmen fehlauslösungssicher ist, im einzelnen nach Gattungsbegriff von Patentanspruch 1. Die einzelnen Vorrichtungsmerkmale nach Patentanspruch 1 und den Unteransprüchen sind für sich bekannt. So ist eine frequenzunabhängige Auslösung durch Gleichrichtung im Sekundärkreis des Summenstromwandlers bekannt (EP-A-0 113 026). Es ist auch eine kurzzeitverzögerte Auslösung durch einen RC-Kreis zum Auslöser durch verschiedene auf dem Markt befindliche Fehlerstromschutzschalter bekannt. Die netzspannungsunabhängige Ausführung von Fehlerstromschutzschaltern ist üblich.

Beim Einsatz eines frequenzunabhängigen, kurzzeitverzögerten Fehlerstromschutzschalters tritt jedoch das Problem auf, daß er stark temperaturabhängig in seiner Auslösung ist. Weiter ist es bei netzspannungsunabhängigen Fehlerstromschutzschaltern erforderlich, der Auslöseeinrichtung bzw. dem Auslöser eine ausreichende Auslöseleistung im Sekundärkreis des Summenstromwandlers anzubieten. Um ohne aktive elektronische Bauelemente, die Netzspannungsabhängigkeit verursachen, auszukommen, kann man Schottky-Dioden einsetzen. Durch den Einsatz von Schottky-Dioden erzielt man aufgrund deren niedrigen Schwellenspannung im Vergleich zu Silicium-Dioden eine höhere Auslösescheinleistung. Schottky-Dioden weisen jedoch einen relativ hohen Sperrstrom auf, der überdies bei zunehmender Sperrschichttemperatur stark ansteigt. Wenn im Auslösekreis eine Kurzzeitverzögerung durch einen RC-Kreis vorgesehen ist, kann der starke Anstieg des Sperrstroms bei hohen Temperaturen in der Größenordnung von 60° C zum Überschreiten der von den Vorschriften geforderten maximal zulässigen Auslöseströmen führen. Das tritt besonders bei phasenangeschnittenen Strömen in der Größenordnung von 135° elektrisch auf. Dies ist darauf zurückzuführen, daß in Sperrrichtung gepolte Dioden als Bürde an der Wandlersekundärwicklung wirken. Dieser Effekt hat die gleiche Wirkung wie eine Scherung der Induktions-Feldstärken-Kennlinie des Wandlers.

Der Erfindung liegt ausgehend von den einzelnen für sich bekannten Erkenntnissen die Aufgabe zugrunde, einen Fehlerstromschutzschalter zu entwickeln, der in einem weiten Temperaturbereich in seinem Auslöseverhalten konstant ist.

Die Lösung der geschilderten Aufgabe erfolgt durch einen Fehlerstromschutzschalter nach Patentanspruch 1. Danach wird eine temperaturunabhängige Auslösung in einem weiten Temperaturbereich, insbesondere von - 25 °C bis + 90 °C gewährleistet. Hierzu erfolgt die Gleichrichtung durch spezielle Schottky-Dioden, mit den Kennwerten

- Sperrstrom         <10 µA bei + 75 °C;
                     <200 µA bei + 125 °C;

- Schwellenspannung      < 0,4 V bei + 25 °C
  und bei einem Durchlaßstrom      von 20 mA

- Sperrspannung      $\geqq$ 50 V.

Andererseits wird ein temperaturkompensierter Summenstromwandler verwandt, der nachstehende Kennwerte erfüllt:
Bei Raumtemperatur

$$\text{Feldstärke } \hat{H} = 15 \text{ mA/cm}$$

$$\text{Delta B dynamisch} \geqq 0{,}17 \text{ Tesla.}$$

Hierbei ist der Quotient Delta B statisch durch Delta B dynamisch $\leqq$ 1,5
und bei - 25 °C beträgt

$$\text{die Feldstärke } \hat{H} = 15 \text{ mA/cm}$$

$$\text{und Delta B dynamisch} \geqq 0{,}8 \text{ x Delta B dynamisch bei Raumtemperatur.}$$

Insbesondere können nach Anspruch 2 Vorkehrungen getroffen sein für Stoßstromunempfindlichkeit durch ein Ventil in einem Nebenzweig zum Auslöser, dessen Ansprechspannung knapp oberhalb der Ansprechspannung des Auslösers liegt und dessen Widerstand mit steigender Spannung sinkt (in an sich bekannter Weise nach EP-B-0 106 045).

Es können auch in an sich bekannter Weise Vorkehrungen getroffen sein für pulsstromempfindliche Auslösung durch eine Kapazität, die entprechend in Serie oder parallel angepaßt ist (DE-B-2 036 497).

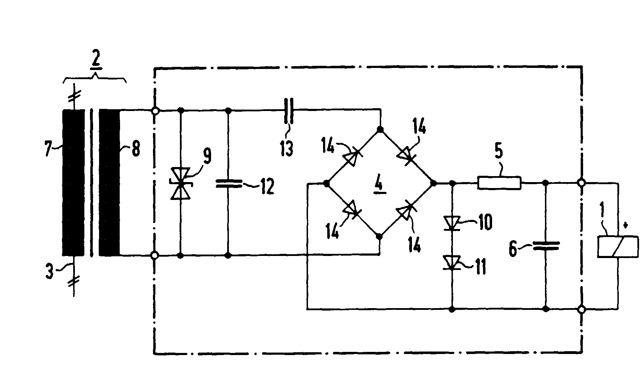

Die Erfindung soll nun anhand eines in der Zeichnung grob schematisch wiedergegebenen Ausführungsbeispiels näher erläutert werden:

Der Fehlerstromschutzschalter nach der Zeichnung arbeitet mit einem Auslöser 1 im Sekundärkreis eines Summenstromwandlers 2. Über ein Schaltschloß kann er mit Schaltkontakten in zu schützenden Leitern 3 in Wirkverbindung stehen. Es sind Vorkehrungen getroffen für frequenzunabhängige Auslösung durch eine Gleichrichtung im Sekundärkreis, im Ausführungsbeispiel eine Gleichrichterbrücke 4. Kurzzeitverzögerte Auslösung wird durch einen RC-Kreis zum Auslöser 1 erreicht. Im Ausführungsbeispiel wird der RC-Kreis durch den Widerstand 5 und den Kondensator 6 gebildet.

Durch die Gleichrichtung und insbesondere durch die Kurzzeitverzögerung entstünde an sich eine starke Temperaturabhängigkeit der Auslösung durch den Auslöser 1. Diese wird beim erfindungsgemäßen Fehlerstromschutzschalter in einem weiten Temperaturbereich, insbesondere von - 25 °C bis + 90 °C durch folgende Maßnahmen vermieden:

Einerseits wird die Gleichrichtung durch spezielle Schottky-Dioden erzielt, die folgende Kennwerte aufweisen:

1. Sperrstrom         <10 µA bei + 75 °C;
                <200 µA bei + 125 °C;

2. Schwellenspannung      < 0,4 V bei + 25 °C
und bei einem Durchlaßstrom     von 20 mA

3. Sperrspannung      $\geqq$ 50 V.

Ein Temperaturgang wird andererseits durch einen Summenstromwandler mit nachstehenden Kennwerten vermieden, so daß man von einem temperaturkompensierten Summenstromwandler sprechen kann.
Die Kennwerte sind:
Bei Raumtemperatur

$$\text{Feldstärke } \hat{H} = 15 \text{ mA/cm}$$

$$\text{Delta B dynamisch} \geqq 0{,}17 \text{ T,}$$

Quotient Delta B statisch durch Delta B dynamisch $\leqq$ 1,5; und bei - 25 °C

$$\text{die Feldstärke } \hat{H} = 15 \text{ mA/cm}$$

und Delta B dynamisch $\geqq$ 0,8 x Delta B dynamisch bei Raumtemperatur.

Eine günstige Auslöescheinleistung am Haltemagnetsystem des Auslösers 1, beispielsweise größer als 150 µVA, erzielt man (dann) beispielsweise bei drei Windungen der Primärwicklung des Summenstromwandlers und bei 200 Windungen der Sekundärwicklung des Summenstromwandlers bei einem Summenstromwandler mit den Wandlerabmessungen: äußerer Durchmesser = 25 mm und innerer Durchmesser = 17,5 mm, Höhe = 22,0 mm und bei einem Material Ultraperm F80 "TK", wie es unter dieser Bezeichnung auf dem Markt ist. Ein näherungsweise konstantes Auslöseverhalten, also ein entsprechend geringer Temperaturgang der Auslöseströme wird begünstigt durch den Einsatz von speziellen Dioden mit einer niedrigen Schwellenspannung bei niedrigen Temperaturen und mit minimalen Sperrströmen bei hohen Temperaturen. In der Praxis eignen sich hierfür spezielle Schottky-Dioden, die die obengenannten Bedingungen für Sperrstrom und Schwellenspannung sowie Durchlaßstrom erfüllen.

Zur Erzielung von Überspannungsschutz kann ein Grundschutz durch die bidirektionale Überspannungsschutzdiode 9 bei einer Begrenzerwirkung auf 5,5 V erreicht werden. Durch die Dioden 10 und 11, insbesondere aus Silicium, vor dem Haltemagneten des Auslösers 1 wird in Verbindung mit dem Widerstand 5 und dem Kodensator 6 des RC-Kreises die Stoßstromfestigkeit erhöht, so daß eine Festigkeit gegen einen Normimpuls 8/20 µSek. auf größer 5 kA erzielt wird.

Im Ausführungsbeispiel sind weiter Vorkehrungen für pulsstromempfindliche Auslösung getroffen, wofür einer der Kondensatoren 12 und 13 oder beide Kondensatoren dienen. Insbesondere bei Verwendung von zwei Kondensatoren 12 und 13 kann der Kondensator 12 darauf abgestimmt sein, hochfrequente Störimpulse in der Wirkung eines Tiefpasses auszufiltern, wie sie z.B. beim Schalten von Induktivitäten an langen Leitungen auftreten können.

Bei vorhandenem Überspannungsschutz wird die maximale Spannungsbeanspruchung in Sperrichtung bestimmt durch die Ansprechspannung des Überspannungsschutzes an der Sekundärwicklung. Es ist günstig, wenn die Begrenzerspannung kleiner oder gleich 10 V ist. Die Forderung nach geringem Sperrstrom und niedriger Durchlaßspannung wird mit ausreichendem Sicherheitsabstand derzeit vorteilhaft durch Schottky-Dioden mit einer Sperrspannung größer oder gleich 50 V erfüllt. Das gute Auslöseverhalten des Auslösers 1 in einem weiten Temperaturbereich wird wesentlich mitbestimmt durch die Überdimensionierung der Schottky-Dioden für die Gleichrichtung, beispielsweise der Gleichrichterbrücke 4, hinsichtlich der Sperrspannung größer oder gleich 50 V. Diese Sperrspannung ermöglicht die weiteren Maßnahmen für einen temperaturkompensierten Summenstromwandler.

**Patentansprüche**

1. Fehlerstromschutzschalter mit einem Auslöser (1) im Sekundärkreis eines Summenstromwandlers (2), wobei der Auslöser (1) über ein Schaltschloß mit Schaltkontakten in zu schützenden Leitern (3) in Wirkverbindung steht,

   - wobei Vorkehrungen getroffen sind:

     für frequenzunabhängige Auslösung durch Gleichrichtung (4) im Sekundärkreis,
     für kurzzeitverzögerte Auslösung durch einen RC-Kreis (5,6) zum Auslöser
     und wobei eine fehlauslösungssichere Auslösung durch einen netzspannungsunabhängigen Aufbau sichergestellt ist,

   dadurch gekennzeichnet, daß

   - eine temperaturunabhängige Auslösung in einem weiten Temperaturbereich,

     insbesondere von - 25 °C bis + 90 °C,
     dadurch gewährleistet wird,

   - daß einerseits eine Gleichrichtung durch spezielle Schottky-Dioden (14) erfolgt,
     mit den Kennwerten:

     1. Sperrstrom       $<10\ \mu A$ bei + 75 °C;
                         $<200\ \mu A$ bei + 125 °C;

     2. Schwellenspannung       $< 0{,}4$ V bei + 25 °C
        und bei einem Durchlaßstrom       von 20 mA

     3. Sperrspannung       $\geqq 50$ V

   - und daß andererseits ein temperaturkompensierter Summenstromwandler verwandt wird, der nachstehende Kennwerte erfüllt:
     Bei Raumtemperatur

     $$\text{Feldstärke } \hat{H} = 15\ \text{mA/cm}$$

     $$\text{Delta B dynamisch} \geqq 0{,}17\ \text{T,}$$

     Quotient Delta B statisch durch Delta B dynamisch $\leqq 1{,}5$ und bei - 25 °C beträgt

     $$\text{die Feldstärke } \hat{H} = 15\ \text{mA/cm}$$

     $$\text{und Delta B dynamisch} \geqq 0{,}8 \times \text{Delta B dynamisch bei Raumtemperatur.}$$

2. Fehlerstromschutzschalter nach Anspruch 1,
   **dadurch gekennzeichnet,** daß Vorkehrungen getroffen sind für Stoßstromfestigkeit durch ein Ventil (9) in einem Nebenzweig zum Auslöser, dessen Ansprechspannung knapp oberhalb der Ansprechspannung des Auslösers liegt und dessen Widerstand mit steigender Spannung sinkt.

3. Fehlerstromschutzschalter nach Anspruch 1,
   **dadurch gekennzeichnet,** daß Vorkehrungen getroffen sind für pulsstromempfindliche Auslösung durch eine Kapazität (12,13).

## Claims

1. Ground-fault circuit interrupter having a tripping device (1) in the secondary circuit of a summation current transformer (2), with the tripping device (1) being in operative connection by means of a breaker mechanism with switching contacts in conductors (3) to be protected,

   - whereby precautions are taken:

     for tripping independent of frequency by rectification (4) in the secondary circuit,
     for short-time-delay tripping by way of an RC circuit (5, 6) to the tripping device,
     and whereby a tripping which is secure against false tripping is ensured by a construction which is independent of system voltage, characterized in that

   - a tripping independent of temperature is guaranteed in a wide temperature range, in particular from -25°C to +90°C, in that

     - on the one hand a rectification takes place by way of special Schottky diodes (14), with the characteristic values:

       1. blocking-state current     < 10 µA at +75°C;
           < 200 µA at +125°C;

       2. threshold voltage     < 0.4 V at +25°C
       and with a conducting-state current of 20 mA

       3. blocking voltage     $\geq$ 50 V

     - and on the other hand a temperature-compensated summation current transformer is used which fulfils the following characteristic values:
       at room temperature

       $$\text{field strength } \hat{H} = 15 \text{ mA/cm}$$

       $$\text{Delta B dynamic} \geq 0.17 \text{ T,}$$

       Quotient Delta B static through Delta B dynamic $\leq$ 1.5
       and at -25°C there are the following amounts:

       $$\text{the field strength } \hat{H} = 15 \text{ mA/cm}$$

       and Delta B dynamic $\geq$ 0.8 x Delta B dynamic at room temperature.

2. Ground-fault circuit interrupter according to claim 1, characterized in that precautions are taken for surge strength with a valve (9) in a secondary branch to the tripping device, the response voltage of which lies just above the response voltage of the tripping device and the resistance of which drops with rising voltage.

3. Ground-fault circuit interrupter according to claim 1, characterized in that precautions are taken for pulse-current-sensitive tripping with a capacitance (12, 13).

## Revendications

1. Disjoncteur à courant de défaut comportant un déclencheur (1) dans le circuit secondaire d'un transformateur (2) de courant totalisateur, le déclencheur (1) coopérant par l'intermédiaire d'un verrou de maintien avec des contacts de coupure dans des conducteurs (3) à protéger,

   - des dispositions étant prises :

     pour un déclenchement, indépendant de la fréquence, par redressement (4) dans le circuit secondaire,

pour un déclenchement, avec un bref retard, par un circuit RC (5, 6) du côté du déclencheur
un déclenchement à l'épreuve des déclenchements erronés étant assuré par une structure indépendante de la tension de réseau,

caractérisé en ce que

- un déclenchement indépendant de la température est assuré dans un vaste domaine de température notamment de
- 25°C à + 90°C par le fait que
- d'une part un redressement s'effectue par des diodes (14) Schottky spéciales, ayant les valeurs caractéristiques :

1. courant de blocage $< 10\ \mu A$ à + 75°C ;
courant de blocage $< 200\ \mu A$ à + 125°C ;

2. tension de seuil $< 0,4\ V$ à + 25°C
et pour un courant passant de 20 mA

3. tension de blocage $\geq 50\ V$

- et d'autre part il est utilisé un transformateur de courant totalisateur compensé en température, qui satisfait aux valeurs caractéristiques ci-dessous : à la température ambiante

intensité du champ $\overset{\wedge}{H} = 15\ mA/cm$

delta B dynamique $\geq 0,17\ T$,

quotient de delta B statique sur delta B dynamique $\leq 1,5$ et à - 25°C

intensité du champ $\overset{\wedge}{H} = 15\ mA/cm$

et delta B dynamique $\geq 0,8$ x delta B dynamique à la température ambiante.

2. Disjoncteur à courant de défaut suivant la revendication 1, caractérisé en ce que des dispositions sont prises pour la résistance aux courants de choc par une valve (9) dans une branche auxiliaire allant au déclencheur, la tension de réponse de cette valve étant légèrement au-dessus de la tension de réponse du déclencheur et la résistance de cette valve baissant lorsque la tension augmente.

3. Disjoncteur à courant de défaut suivant la revendication 1,
caractérisé en ce que des dispositions sont prises pour un déclenchement sensible à un courant pulsé en prévoyant une capacité (12, 13).